(19) Europäisches Patentamt
European Patent Office
Office européen des brevets

(11) EP 0 627 969 B1

(12) **FASCICULE DE BREVET EUROPEEN**

(45) Date de publication et mention
de la délivrance du brevet:
**17.07.1996 Bulletin 1996/29**

(21) Numéro de dépôt: **93905424.3**

(22) Date de dépôt: **25.02.1993**

(51) Int. Cl.⁶: **B23B 27/12**, B23F 5/16,
B23Q 27/00

(86) Numéro de dépôt international:
**PCT/FR93/00186**

(87) Numéro de publication internationale:
**WO 93/16832 (02.09.1993 Gazette 1993/21)**

(54) **PROCEDE ET DISPOSITIF DE TAILLAGE EN COUTEAU-FRAISE PAR GENERATION**

VERFAHREN UND VORRICHTUNG ZUM WÄLZSCHÄLEN

HOPPING METHOD AND DEVICE BY MEANS OF A MILLING KNIFE

(84) Etats contractants désignés:
**AT BE CH DE DK ES FR GB GR IE IT LI LU MC NL PT SE**

(30) Priorité: **27.02.1992 FR 9202550**

(43) Date de publication de la demande:
**14.12.1994 Bulletin 1994/50**

(73) Titulaire: **GRADEL, Pierre**
**F-74130 Ayze (FR)**

(72) Inventeur: **GRADEL, Pierre**
**F-74130 Ayze (FR)**

(74) Mandataire: **Poncet, Jean-François**
**Cabinet Poncet,**
**7, chemin de Tillier,**
**B.P. 317**
**74008 Annecy Cédex (FR)**

(56) Documents cités:
FR-A- 511 480 US-A- 1 434 430
US-A- 1 461 219

• METAALBEWERKING no. 20, 30 Mars 1967, pages 381 - 383 B. VAN DER HORST "AFWIKKELDRAAIEN"

## Description

La présente invention concerne les procédés et dispositifs d'usinage permettant de tailler des filets hélicoïdaux sur une pièce tenue par la broche d'un tour.

Les tours sont habituellement prévus pour effectuer divers usinages sur une pièce, et notamment le tournage, le fraisage, le perçage.

Toutefois, les tours actuellement utilisés ne comportent aucun moyen permettant de tailler de façon économique des filets hélicoïdaux sur la pièce tenue par la broche du tour.

Tout au plus, on peut réaliser sur un tour un filetage par passes successives d'un outil coupant à profil de creux de filets. Pendant la rotation de la pièce tenue par la broche du tour, l'outil coupant est en appui sur la face latérale de la pièce, et l'on déplace progressivement l'outil en translation longitudinale selon le pas du filet à réaliser. Un tel procédé nécessite plusieurs passes successives du même outil, de sorte que l'opération est longue et onéreuse.

Par ailleurs, on connaît depuis longtemps des machines de taillage de filets par génération, décrites par exemple dans le document US-A-1 461 219. La structure décrite dans ce document, publié en 1923, est une machine spécialisée dans le taillage des filets, et qui ne permet pas de réaliser des usinages variés tels que le fraisage, le tournage et le perçage.

Bien qu'une telle structure soit connue depuis longtemps, elle n'a jamais été appliquée aux dispositifs adaptés sur les tours.

RESUME DE L'INVENTION

Le problème proposé par la présente invention est de concevoir un nouveau dispositif qui puisse être adapté sur un tour, et qui soit capable de tailler des filets hélicoïdaux avec une rapidité compatible avec les autres usinages réalisables sur le même tour.

En particulier, l'invention vise à réaliser sur un même tour et sur une même pièce diverses opérations d'usinage successives comprenant l'usinage d'un filet hélicoïdal. On réalise ainsi une pièce entière à l'aide d'une seule machine plutôt qu'en utilisant plusieurs machines successives, ce qui permet d'une part le travail en temps masqué, et d'autre part une meilleure qualité : on peut en effet obtenir une meilleure concentricité des diverses parties de la pièce, on peut réaliser une meilleure précision dans les distances relatives entre les parties différentes de la pièce obtenue par des usinages successifs, on supprime les pertes de temps dues aux manutentions entre diverses machines.

L'invention vise en outre à réduire les coûts en simplifiant les machines utilisées, notamment en utilisant au maximum les différents organes du tour.

Pour atteindre ces objets ainsi que d'autres, l'invention prévoit un tour adapté pour effectuer notamment le tournage de pièces à usiner, ledit tour comprenant un bâti portant :

- au moins une broche entraînée en rotation par des moyens d'entraînement autour d'un axe de broche et conformée pour tenir une pièce à usiner,
- au moins un chariot porte-outils, adapté pour porter au moins un outil de tournage et pouvant se déplacer en translation sur le bâti selon un axe de plongée radial perpendiculaire à l'axe de broche,
- des moyens pour assurer un déplacement relatif en translation du chariot porte-outils et de la broche l'un par rapport à l'autre sur le bâti selon un axe de chariotage.

Selon l'invention :
- l'un au moins des outils de tournage comporte une arête de coupe continue dentelée et est monté rotatif sur le chariot porte-outils selon un axe de rotation non parallèle à l'axe de broche,
- ledit outil de tournage est entraîné en rotation par un pignon monté sur le porte-outils et en prise sur une vis sans fin,
- la vis sans fin est montée sur un arbre orienté selon une direction fixe sur le bâti du tour et parallèle à l'axe de chariotage, l'arbre de vis sans fin étant fixe en translation axiale sur le bâti de tour et étant entraîné en rotation par les moyens de commande de rotation de la broche du tour.

Selon un premier mode de réalisation, l'arbre de vis sans fin est entraîné en rotation par le moteur de broche, auquel il est relié par une transmission mécanique appropriée du tour.

Par exemple, l'arbre de vis sans fin est relié mécaniquement à une prise de force du tour par une transmission à cardans.

Selon un autre mode de réalisation, l'arbre de vis sans fin est entraîné par un moteur auxiliaire piloté par la commande numérique du tour.

Dans tous les cas, la rotation de l'outil de tournage s'effectue selon une vitesse telle que le glissement longitudinal apparent entre la portion active d'arête de coupe et la surface de pièce à usiner est sensiblement nul.

BREVE DESCRIPTION DES DESSINS

D'autres objets, caractéristiques et avantages de la présente invention ressortiront de la description suivante de modes de réalisation particuliers, faite en relation avec les figures jointes, parmi lesquelles :

- la figure 1 est une vue schématique en perspective d'un outil de coupe selon l'invention taillant un filet sur la surface latérale d'une pièce à usiner montée sur la broche d'un tour ;
- la figure 2 est une vue schématique en bout de l'ensemble de la figure 1 ;
- la figure 3 est une vue en perspective partiellement écorchée montrant un outil et un support d'outil selon l'invention ;

- la figure 4 est une vue en perspective d'un outil et de son support d'outil selon une variante de l'invention ;
- la figure 5 est une vue éclatée de l'ensemble outil-support d'outil de la figure 4 ;
- la figure 6 illustre les profils respectifs d'outil et de pièce dans un mode de réalisation donné à titre d'exemple ; et
- la figure 7 illustre la cinématique d'un tour multibroche pourvu d'un dispositif selon l'invention.

DESCRIPTION DES MODES DE REALISATION PREFERES

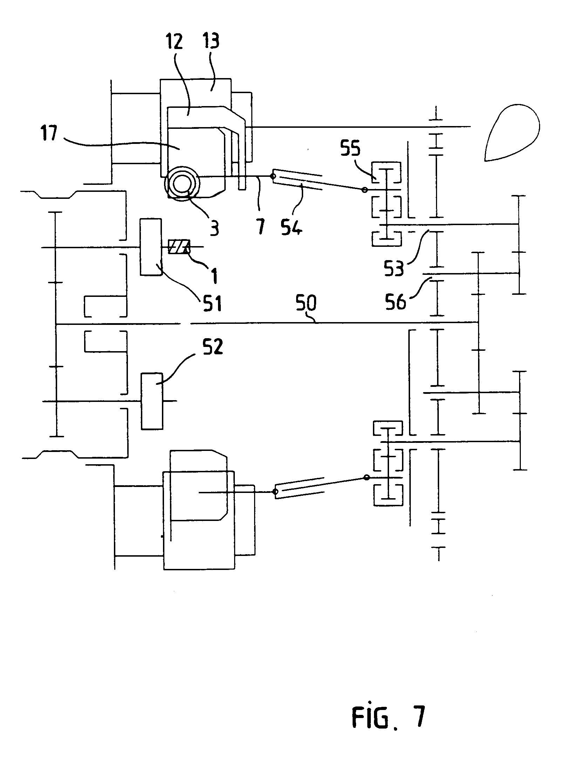

Le dispositif d'usinage selon l'invention comprend un tour traditionnel, pouvant être un tour monobroche ou un tour multibroche. Du fait de leur caractère traditionnel et courant, les parties essentielles d'un tel tour ne sont pas représentées sur les dessins. Seule la figure 7 donne une représentation schématique de la cinématique du tour muni du dispositif selon l'invention.

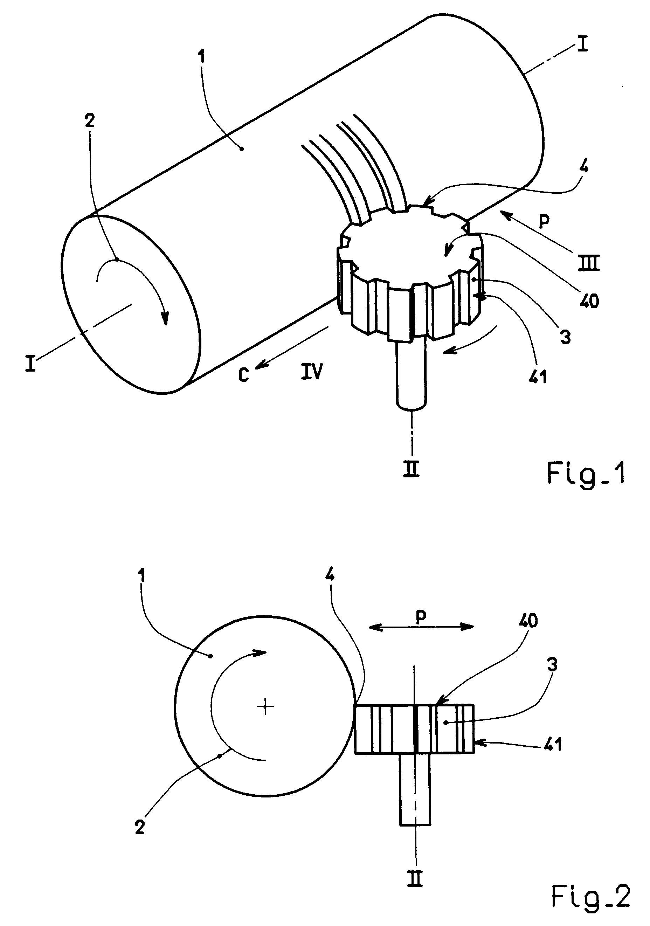

Ainsi, le dispositif selon l'invention est adapté sur un tour traditionnel comportant au moins une broche entraînée en rotation par des moyens d'entraînement autour d'un axe I-I de broche, représenté sur la figure 1, la broche étant conformée pour tenir une pièce à usiner 1. La pièce à usiner 1 est ainsi entraînée en rotation selon l'axe I-I de broche, dans un sens de rotation représenté par la flèche 2.

Le tour comprend, de manière traditionnelle, un chariot porte-outils, non représenté sur la figure 1, pouvant se déplacer en translation selon un axe de plongée III radial perpendiculaire à l'axe I-I de broche, pour fixer une valeur P choisie de plongée. Dans un tour à poupée fixe, le chariot porte-outils peut en outre se déplacer en translation sur le bâti de tour selon un axe de chariotage IV. Dans un tour à poupée mobile, c'est la broche qui se déplace elle-même en translation selon l'axe de chariotage IV, qui est alors parallèle à l'axe I-I de broche. Ainsi, dans tous les cas, on assure un déplacement relatif du chariot porte-outils et de la broche selon l'axe de chariotage IV. Pour la formation d'une surface latérale de pièce à usiner 1 généralement cylindrique, l'axe de chariotage IV est parallèle à l'axe de broche I-I. Pour réaliser une pièce cônique, l'axe de chariotage IV peut être oblique par rapport à l'axe I-I de broche. L'outil de tournage 3 est porté par le chariot porte-outils, et présente, de façon connue, au moins une arête de coupe 4 susceptible d'entrer en contact avec la surface latérale de la pièce à usiner 1 de sorte que, s'opposant à la rotation de la pièce à usiner 1 selon le sens 2, l'arête de coupe enlève de la matière sur la surface latérale de la pièce à usiner 1.

Selon l'invention, l'outil de tournage 3 utilisé pour le taillage des filets comprend une pluralité de portions successives d'arête de coupe, susceptibles de venir chacune successivement en prise sur la pièce à usiner 1 pour assurer l'usinage de la surface de pièce. Le dispositif comprend en outre des moyens d'entraînement d'outil pour entraîner en rotation l'outil de tournage 3 selon un axe de rotation II non parallèle à l'axe de broche I-I. La rotation de l'outil de tournage 3 selon son axe de rotation II permet d'amener successivement en contact avec la pièce à usiner 1 lesdites portions successives de l'arête de coupe 4 de l'outil de tournage 3.

Les moyens d'entraînement d'outil sont adaptés pour entraîner l'outil de tournage 3 selon une rotation R dont la valeur est fonction de la translation C du chariot selon l'axe de chariotage IV.

Selon l'invention, la rotation R de l'outil de tournage 3 est une fonction linéaire de la translation relative C du chariot et de la broche l'un par rapport à l'autre selon l'axe de chariotage IV, fonction qui peut être représentée par l'équation suivante :

$$R = kC + X$$

dans laquelle R est la valeur de la rotation, C est la valeur de la translation relative du chariot et de la broche, k est une constante de proportionnalité, X est une valeur de rotation pouvant être soit une constante, soit une valeur qui est elle-même fonction du temps ou d'une autre variable de rotation.

Dans les modes de réalisation représentés sur les figures 1 à 6, l'outil de tournage 3 comporte une arête de coupe 4 continue se développant dans un plan perpendiculaire à l'axe de rotation II de l'outil de tournage 3. L'arête de coupe 4 est l'arête formée à l'intersection entre une face frontale 40 d'outil avantageusement plane et une face latérale 41.

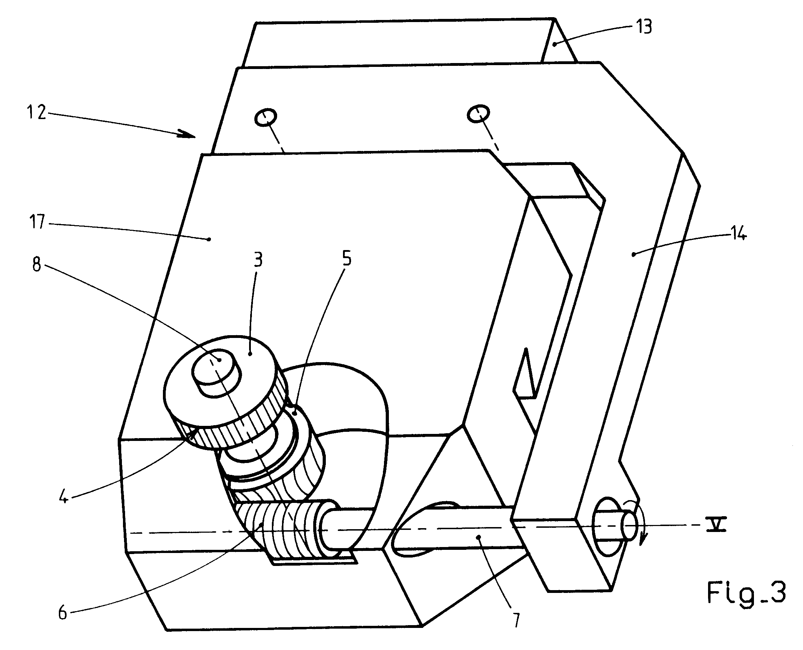

Avec un tel outil de tournage 3, on peut réaliser soit des surfaces latérales de pièce à usiner 1 présentant une forme de révolution autour de l'axe I-I de broche, soit des formes hélicoïdales. Les modes de réalisation représentés sur les figures 3 à 5 permettent de réaliser indifféremment les formes de révolution et les formes hélicoïdales.

Dans ces modes de réalisation, l'outil de tournage 3 est entraîné en rotation, directement ou indirectement, par un pignon 5 en prise sur une vis sans fin 6. La vis sans fin 6 est montée sur un arbre 7 orienté selon une direction V fixe par rapport au bâti du tour et parallèle à l'axe de chariotage IV. Dans le cas d'un tour à poupée fixe, l'arbre 7 de vis sans fin est fixe en translation axiale sur le bâti de tour. Dans le cas d'un tour à poupée mobile, l'arbre 7 de vis sans fin suit en translation axiale le broche de tour, ou, en alternative, une rotation supplémentaire est imprimée à la vis sans fin 6 pour que la surface active de l'outil suive sans glissement apparent les déplacements de la broche.

Dans le mode de réalisation de la figure 3, le pignon 5 est monté sur le même arbre que l'outil de tournage 3. La vis sans fin 6 est alors en appui sur le pignon 5 du même côté que la partie active d'arête de coupe 4 de l'outil de tournage 3.

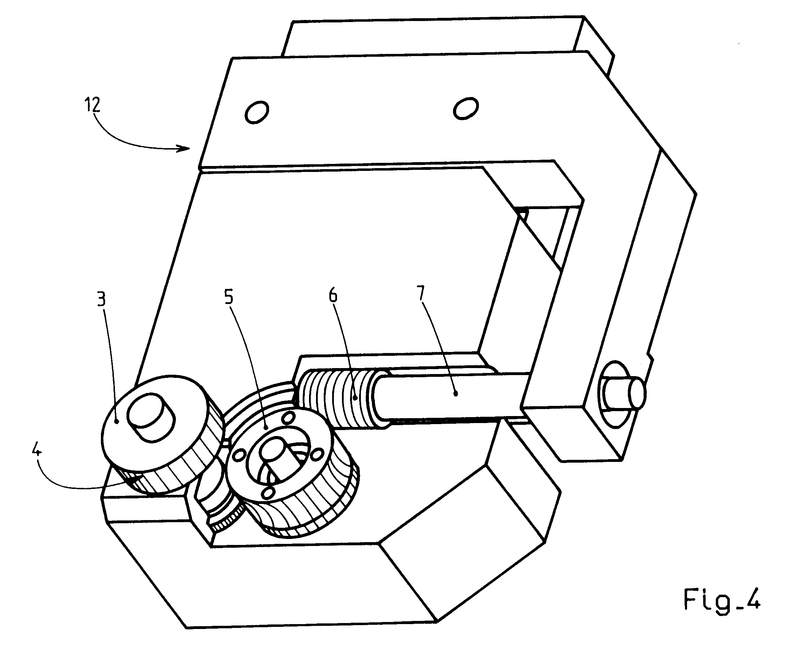

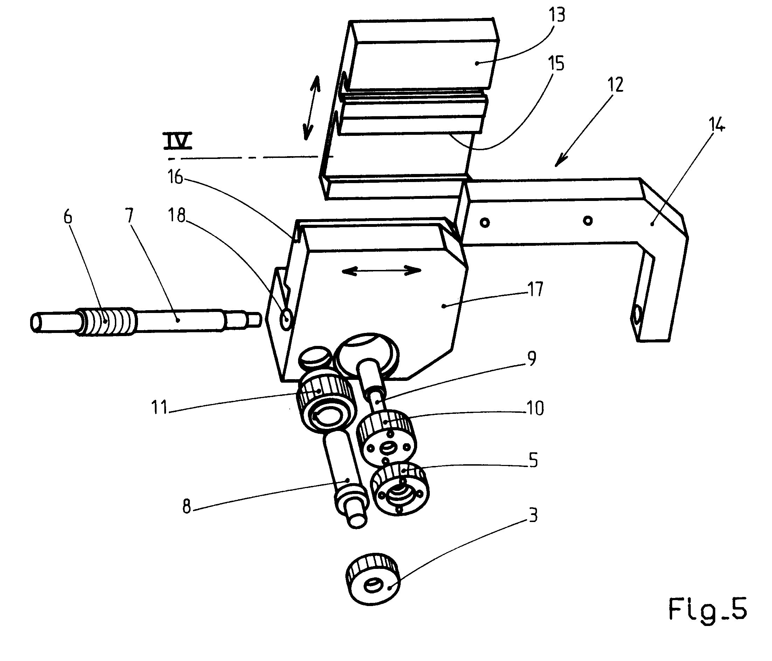

Dans le mode de réalisation des figures 4 et 5, la vis sans fin 6 est appliquée sur le pignon 5 selon la face opposée à la partie active d'arête de coupe 4 de l'outil de tournage 3. Dans ce cas, on peut prévoir une transmission indirecte, le pignon 5 étant monté sur un arbre secondaire 9 parallèle à l'arbre 8 de l'outil de tournage 3, l'arbre secondaire 9 portant une première roue de transmission 10 en prise sur une seconde roue de transmission 11 elle-même portée par l'arbre 8 de l'outil de tournage 3. La transmission par les roues 10 et 11 inverse donc le mouvement de rotation entre le pignon 5 et l'outil de tournage 3.

Les figures 3 à 5 représentent la structure générale d'un porte-outils 12 selon l'invention, monté sur la structure de tour. Le porte-outils 12 comprend un ensemble fixe formé d'un support 13 et d'un organe de maintien de vis 14. Le support 13 est fixé au bâti du tour, par des moyens de fixation non représentés. L'organe de maintien de vis 14 est fixé au support 13 par des moyens de fixation, par exemple des moyens de fixation autorisant un réglage par translation longitudinale selon un axe parallèle à l'axe de chariotage IV. Le support 13 est muni de glissières 15 longitudinales selon l'axe de chariotage IV, destinées à recevoir une portion correspondante 16 du chariot porte-outils 17. Ainsi, le chariot porte-outils 17 est mobile en translation longitudinale sur le support 13 selon l'axe de chariotage IV. Le chariot porte-outils 17 est muni d'un passage longitudinal 18 permettant le libre coulissement de la vis sans fin 6 et de son arbre 7. De préférence, l'organe de maintien de vis 14 maintient la vis sans fin 6 et l'arbre 7 en position longitudinale fixe sur le bâti de tour selon l'axe de chariotage IV. Ainsi, pendant les mouvements de chariotage du chariot porte-outils 17, la vis sans fin 6 et l'arbre 7 restent selon des positions axiales fixes par rapport au bâti de tour.

Pour réaliser sur un tour à poupée fixe une pièce 1 dont la surface latérale est de révolution, la vis sans fin 6 est maintenue fixe en rotation, et sert de crémaillère pour le pignon 5. Lors des mouvements de chariotage, l'outil de tournage 3 est ainsi pivoté selon une rotation dont la valeur R est directement proportionnelle à la valeur de la translation C du chariot 17 selon l'axe de chariotage IV. L'outil de tournage 3 comporte une arête de coupe 4 continue et dentelée, dont les portions successives sont adaptées pour réaliser la forme de surface latérale de pièce 1 désirée.

Pour réaliser une telle pièce à surface latérale de révolution sur un tour à poupée mobile, on peut faire pivoter la vis sans fin 6 d'une valeur commandée par l'avance de la broche et de la pièce à usiner.

Pour réaliser une pièce 1 présentant une surface latérale munie de filets hélicoïdaux, on imprime en outre à la vis sans fin 6 un mouvement de rotation, pour produire une rotation complémentaire de l'outil de tournage 3 selon une vitesse de rotation d'outil égale à un sous-multiple de la vitesse de rotation de la broche du tour.

Pour cela, l'arbre 7 de vis sans fin peut être entraîné en rotation par le moteur de broche lui-même, auquel il est relié par une transmission mécanique appropriée, illustrée sur la figure 7. Cette figure représente la cinématique d'un tour multibroche, avec un arbre principal d'entraînement 50 permettant d'entraîner l'ensemble des organes du tour, et en particulier les broches telles que les deux broches 51 et 52. En face de chaque broche telle que la broche 51 sont prévues diverses prises de force, telles que par exemple les prises de force 53 et 56, correspondant à des fractions appropriées de la vitesse de rotation de l'arbre principal 50 et de la broche correspondante 51.

On a représenté, sur la figure, les porte-outils associés à chacune des broches 51 et 52. Le porte-outils 17 associé à la broche 51 est déplaçable en translation longitudinale, et est actionné par les moyens d'actionnement habituels du tour. Le porte-outils 17 coulisse ainsi longitudinalement sur le support 13 fixé au bâti du tour, et entraîne dans sa translation l'outil 3 monté rotatif sur un axe de rotation d'outil. Comme expliqué précédemment en relation avec les figures 3 ou 4, l'outil 3 est entraîné en rotation par un pignon en prise sur une vis sans fin portée par un arbre de vis 7. L'arbre de vis 7 est entraîné en rotation par le moteur de broche auquel il est relié par une transmission mécanique appropriée : comme représenté, l'arbre 7 de vis sans fin est relié à une prise de force 53 du tour par une transmission à cardans 54 et éventuellement un train d'engrenages 55. On utilise ainsi au mieux les moyens du tour pour entraîner en rotation l'outil 3 dans son mouvement permettant le taillage de filets par génération sur la pièce 1 tenue par la broche 51.

En alternative, l'arbre 7 de vis sans fin peut être entraîné par un moteur auxiliaire piloté par la commande numérique du tour.

Dans les deux cas, la valeur de rotation R de l'outil de tournage 3 reste une fonction linéaire $R = kC + X$ de la translation C du chariot 17 selon l'axe de chariotage IV, la variable X étant elle-même égale à un sous-multiple de la valeur de rotation de la broche du tour.

Un procédé de tournage selon l'invention, au moyen d'un tour muni d'une broche porte-pièce et d'un outil de tournage 3 monté sur un porte-outils 17, se caractérise ainsi par le fait que, pendant le tournage, on pivote progressivement l'outil de tournage 3 par rotation autour d'un axe II non parallèle à l'axe de broche I-I pour amener successivement en contact avec la pièce à usiner 1 des portions successives de l'arête de coupe 4 de l'outil de tournage 3.

La rotation de l'outil de tournage 3 s'effectue selon une vitesse telle que le glissement longitudinal apparent entre la portion active d'arête de coupe 4 et la surface de pièce à usiner 1 est sensiblement nul.

Le dispositif selon l'invention permet de réaliser sur la surface extérieure d'une pièce des formes très diverses. La forme de l'outil de tournage 3 est déterminée en fonction de la forme de pièce à réaliser. Il faut donc en principe un outil spécifique pour chaque forme de pièce à réaliser.

Par exemple, pour réaliser sur la surface latérale d'une pièce 1 des gorges ou nervures annulaires, ou un filetage hélicoïdal, on utilise un outil de tournage 3 dont la surface latérale 41 est dentelée, comme le représente schématiquement la figure 1. Ainsi, l'arête de coupe 4 présente une forme ondulée, les ondulations étant choisies en fonction de la taille des filets à réaliser sur la pièce 1.

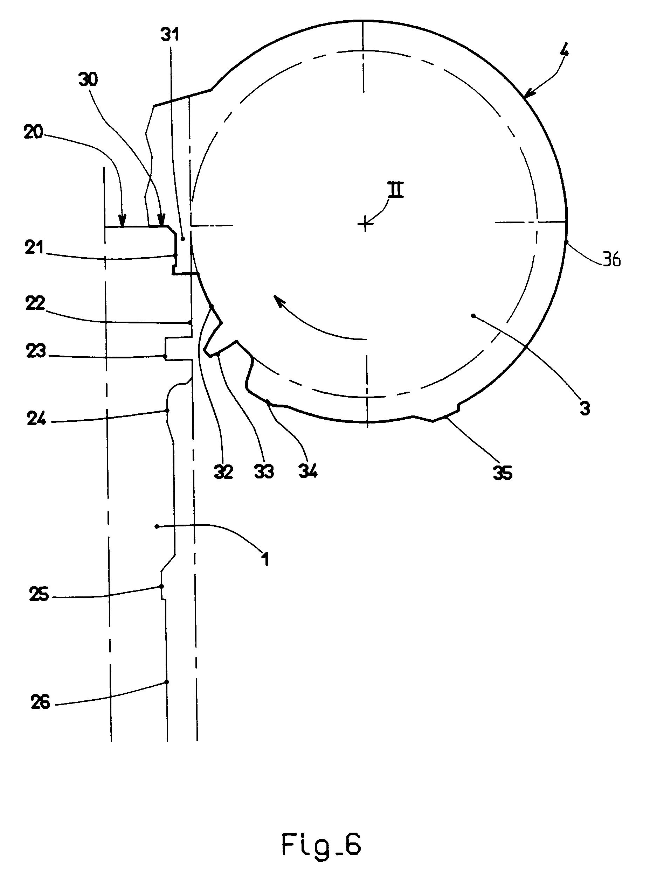

La figure 6 illustre un exemple de réalisation d'une pièce 1 à profil variable au moyen de l'outil de tournage 3. On distingue, dans le profil longitudinal de la pièce 1 à réaliser, une face d'extrémité frontale 20, un premier segment cylindrique 21, un second segment cylindrique 22 de diamètre plus important, une gorge annulaire 23, un évidement annulaire 24, un second évidement annulaire 25, une partie cylindrique d'extrémité 26. L'outil de tournage 3 présente lui-même un profil tel que l'arête de coupe comprend des portions successives correspondant à chacune des formes spécifiques de la pièce 1. Ainsi, on retrouve sur l'arête de coupe 4 une portion 30 correspondant à la face 20 de la pièce, une portion successive 31 correspondant au segment 21, une seconde portion successive 32 correspondant au segment 22, une portion saillante 33 correspondant à la gorge annulaire 23, une portion légèrement saillante 34 correspondant à l'évidement annulaire 24, une autre portion successive 35 correspondant au second évidement annulaire 25, et enfin une portion circulaire 36 correspondant à la partie cylindrique d'extrémité 26, ladite portion circulaire 36 étant centrée sur l'axe de rotation II de l'outil de tournage.

Dans tous les cas, la face frontale 40 de l'outil de tournage 3 est positionnée sensiblement à hauteur de centre de la pièce 1, c'est-à-dire que le plan dans lequel est située la face frontale 40 de l'outil de tournage 3 contient l'axe I-I de broche.

La présente invention n'est pas limitée aux modes de réalisation qui ont été explicitement décrits, mais elle en inclut les diverses variantes et généralisations contenues dans le domaine des revendications ci-après.

**Revendications**

1. Tour adapté pour effectuer notamment le tournage de pièces à usiner (1), ledit tour comprenant un bâti portant :

   - au moins une broche entraînée en rotation par des moyens d'entraînement autour d'un axe (I-I) de broche et conformée pour tenir une pièce à usiner (1),
   - au moins un chariot porte-outils (17), adapté pour porter au moins un outil de tournage (3) et pouvant se déplacer en translation sur le bâti selon un axe de plongée (III) radial perpendiculaire à l'axe (I-I) de broche,
   - des moyens pour assurer un déplacement relatif en translation du chariot porte-outils (17) et de la broche l'un par rapport à l'autre sur le bâti selon un axe de chariotage (IV),

   caractérisé en ce que :

   - l'un au moins des outils de tournage (3) comporte une arête de coupe (4) continue dentelée et est monté rotatif sur le chariot porte-outils (17) selon un axe de rotation (II) non parallèle à l'axe de broche (I-I),
   - ledit outil de tournage (3) est entraîné en rotation par un pignon (5) monté sur le porte-outils (17) et en prise sur une vis sans fin (6),
   - la vis sans fin (6) est montée sur un arbre (7) orienté selon une direction (V) fixe sur le bâti du tour et parallèle à l'axe de chariotage (IV), l'arbre (7) de vis sans fin étant fixe en translation axiale sur le bâti de tour et étant entraîné en rotation par les moyens de commande de rotation de la broche du tour.

2. Tour selon la revendication 1, caractérisé en ce que l'arbre (7) de vis sans fin est entraîné en rotation par le moteur de broche, auquel il est relié par une transmission mécanique appropriée du tour.

3. Tour selon la revendication 2, caractérisé en ce que l'arbre (7) de vis sans fin est relié mécaniquement à une prise de force (53) du tour par une transmission à cardans (54).

4. Tour selon la revendication 1, caractérisé en ce que l'arbre (7) de vis sans fin est entraîné par un moteur auxiliaire piloté par la commande numérique du tour.

5. Tour selon l'une quelconque des revendications 1 à 4, dans lequel le tour est un tour multibroche, avec un arbre principal d'entraînement (50) entraînant l'ensemble des organes du tour et notamment une pluralité de broches (51, 52) porte-pièces associées chacune à un porte-outils déplaçable en translation sur le bâti, l'un des porte-outils (17) associé à l'une des broches (51) portant un outil (3) monté rotatif selon un axe de rotation d'outil et entraîné en rotation par un pignon en prise sur une vis sans fin portée par un arbre de vis (7) lui-même entraîné en rotation par une prise de force (53) du tour à laquelle il est relié par une transmission à cardans (54).

6. Procédé de tournage d'une pièce à usiner (1), au moyen d'un tour muni d'au moins une broche porte-pièce et d'outils de tournage montés sur au moins un porte-outils (17), caractérisé en ce que :

   - on utilise un tour selon l'une quelconque des revendications 1 à 5,
   - le procédé comprend une étape de taillage au cours de laquelle on pivote progressivement l'un des outils de tournage (3) par rotation autour d'un axe (II) non parallèle à l'axe de broche (I-I) pour amener successivement en contact avec la pièce à usiner (1) des portions successives de l'arête de coupe (4) dudit outil de tournage (3).

7. Procédé selon la revendication 6, caractérisé en ce que la rotation dudit outil de tournage (3) s'effectue selon une vitesse telle que le glissement longitudinal apparent entre la portion active d'arête de coupe (4) et la surface de pièce à usiner (1) est sensiblement nul.

## Claims

1. Lathe adapted to turn workpieces (1), said lathe comprising a bed carrying:

   - at least one headstock spindle rotated by drive means about a headstock spindle axis (I-I) and shaped to hold a workpiece (1) to be machined,
   - at least one toolholder carriage (17) adapted to carry at least one turning tool (3) and to move in translation on the lathe bed along a radial infeed axis (III) perpendicular to the headstock spindle axis (I-I),
   - means for causing relative movement in translation of the toolholder carriage (17) and the headstock spindle on the lathe bed along a carriage axis (IV),
   characterised in that:
   - at least one of the turning tools (3) has a continuous toothed cutting edge (4) and is mounted to rotate on the toolholder carriage (17) about a rotation axis (II) which is not parallel to the headstock spindle axis (I-I),
   - said turning tool (3) is rotated by a gearwheel (5) mounted on the toolholder (17) and meshing with a lead screw (6),
   - the lead screw (6) is mounted on a shaft (7) oriented in a direction (V) fixed relative to the lathe bed and parallel to the carriage axis (IV), the lead screw shaft (7) being fixed in the direction of axial translation relative to the lathe bed and being rotated by the means for rotating the headstock spindle of the lathe.

2. Lathe according to claim 1 characterised in that the lead screw shaft (7) is rotated by the headstock spindle motor to which it is coupled by an appropriate mechanical transmission of the lathe.

3. Lathe according to claim 2 characterised in that the lead screw shaft (7) is coupled mechanically to a power take-off (53) of the lathe by a universal joint transmission (54).

4. Lathe according to claim 1 characterised in that the lead screw shaft (7) is driven by an auxiliary motor controlled by the numerical controller of the lathe.

5. Lathe according to any one of claims 1 to 4 wherein the lathe is a mutispindle lathe with a main drive shaft (50) driving all parts of the lathe and in particular a plurality of workpiece-holding headstock spindles (51, 52) each associated with a toolholder movable in translation on the lathe bed, one of the toolholders (17) associated with one of the headstock spindles (51) carrying a tool (3) rotatable about a tool rotation axis and rotated by a gearwheel meshing with a lead screw carried by a lead screw shaft (7) rotated by a power take-off (53) of the lathe to which it is coupled by a universal joint transmission (54).

6. Method of turning a workpiece (1) using a lathe fitted with at least one workpiece-holding headstock spindle and turning tools mounted on at least one toolholder (17) characterised in that :

   - a lathe according to any one of claims 1 to 5 is used,
   - the method comprises a cutting step in which one of the turning tools (3) is progressively rotated about an axis (II) which is not parallel to the headstock spindle axis (I-I) to bring successive portions of the cutting edge (4) of said turning tool (3) into contact with the workpiece (1).

7. Method according to claim 6 characterised in that said turning tool (3) is rotated at a speed such that there is substantially no apparent longitudinal slip between the active portion of the cutting edge (4) and the surface of the workpiece (1).

## Patentansprüche

1. Drehbank mit einem Maschinenbett insbesondere zum Drehen von Werkstücken (1), mit:

   - mindestens einer Spindel, die durch Antriebsvorrichtungen um eine Spindelachse (I-I) in Drehrichtung angetrieben wird, und die zum Halten eines Werkstücks (1) vorgesehen ist,

   - mindestens einem Werkzeugträgerschlitten (17), der zum Tragen von mindestens einem Drehwerkzeug (3) vorgesehen ist, und der auf dem Maschinenbett entlang einer zur Spindelachse (I-I) radial senkrechten Zustellachse (III) verschiebbar ist,

   - Vorrichtungen, die ein Verschieben des Werkzeugträgerschlittens (17) auf dem Maschinenbett relativ zur Spindel entlang einer Vorschubachse (IV) sicherstellen,

   **dadurch gekennzeichnet**, daß:

- mindestens eines der Drehwerkzeuge (3) eine Schneidkante (4) aufweist, die durchgehend gezahnt und um eine zur Spindelachse (I-I) nicht parallele Drehachse (II) drehbar auf dem Werkzeugträgerschlitten (17) angebracht ist,

- das Drehawerkzeug (3) durch ein Ritzel (5) in Drehrichtung angetrieben wird, das auf dem Werkzeugträgerschlitten (17) angebracht und im Eingriff mit einer Schnecke (6) ist,

- die Schnecke (6) auf einer Welle (7) angebracht ist, die in einer festen Richtung (V) des Maschinenbettes der Drehbank parallel zur Vorschubachse (IV) ausgerichtet ist, wobei die Welle (7) der Schnecke axial unverschieblich auf dem Maschinenbett der Drehbank befestigt ist und durch Antriebsvorrichtungen der Spindel der Drehbank in Drehrichtung angetrieben ist.

2. Drehbank nach Anspruch 1, **dadurch gekennzeichnet**, daß die Welle (7) der Schnecke durch den Spindelmotor in Drehrichtung angetrieben wird, mit dem sie über ein für die Drehbank geeignetes mechanisches Getriebe verbunden ist.

3. Drehbank nach Anspruch 2, **dadurch gekennzeichnet**, daß die Welle (7) der Schnecke über ein Kardangetriebe (54) mechanisch mit einer Zapfenwelle (53) der Drehbank verbunden ist.

4. Drehbank nach Anspruch 1, **dadurch gekennzeichnet**, daß die Welle (7) der Schnecke durch einen zusätzlichen Motor angetrieben ist, der durch die numerische Steuerung der Drehbank gesteuert wird.

5. Drehbank nach einem der Ansprüche 1 bis 4, wobei die Drehbank eine mehrspindelige Drehbank ist, mit einer Hauptantriebswelle (50), die die Drehbankwerkzeuge antreibt, insbesondere eine Vielzahl von Werkstückträgerspindeln (51, 52), die jeweils einem auf dem Maschinenbett verschieblichen Werkzeugträger zugeordnet sind, wobei einer der Werkzeugträger (17), der einer der Spindeln (51) zugeordnet ist, ein Werkzeug (3) trägt, das um eine Drehachse des Werkzeuges drehbar angebracht ist, und das durch ein Ritzel in Drehrichtung angetrieben ist, das im Eingriff mit einer von einer Welle (7) getragenen Schnecke ist, die selbst durch eine Zapfenwelle (53) der Drehbank in Drehrichtung angetrieben wird, mit dem sie über ein Kardangetriebe (54) verbunden ist.

6. Verfahren zum Drehen eines Werkstücks (1) mittels einer Drehbank, die mit mindestens einer Werkstückträgerspindel und mit auf mindestens einem Werkzeugträger (17) angebrachten Drehwerkzeugen versehen ist, **dadurch gekennzeichnet**, daß:

- man eine Drehbank gemäß einem der Ansprüche 1 bis 5 verwendet,

- das Verfahren einen Schneideschritt enthält, währenddessen man eines der Drehwerkzeuge (3) fortschreitend in Drehrichtung um eine zur Spindelachse (I-I) nicht parallele Achse (II) dreht, um aufeinanderfolgende Bereiche der Schneidkante (4) des Drehwerkzeugs (3) nacheinander mit dem Werkstück (1) in Berührung zu bringen.

7. Verfahren nach Anspruch 6, **dadurch gekennzeichnet**, daß die Drehung des Drehwerkzeugs (3) sich in einer solchen Geschwindigkeit vollzieht, daß in Längsrichtung zwischen dem aktiven Bereich der Schneidkante (4) und der Oberfläche des Werkstücks (1) im wesentlichen kein Gleiten stattfindet.

Fig_1

Fig_2

8

Fig.3

EP 0 627 969 B1

EP 0 627 969 B1

Fig. 4

Fig.-5

Fig_6

FIG. 7